# FASCICULE DE BREVET EUROPEEN

(11) **EP 3 278 391 B1**
(45) Date de publication et mention de la délivrance du brevet: **25.05.2022**
(21) Numéro de dépôt: 16715271.9
(22) Date de dépôt: 30.03.2016
(51) Int. Cl.: H01M 8/0668, H01M 8/18, H01M 8/04014, H01M 8/04119

(54) **SYSTEME REVERSIBLE DE PRODUCTION D'ELECTRICITE PAR PILE A COMBUSTIBLE SOFC AVEC CIRCULATION DES ESPECES CARBONEES EN BOUCLE FERMEE**
SOFC-BASIERTES REVERSIBLES SYSTEM ZUR ERZEUGUNG VON ELEKTRIZITÄT MIT ZIRKULATION VON KOHLENSÄUREHALTIGEN SPEZIES IN EINEM GESCHLOSSENEN KREIS
SOFC-BASED REVERSIBLE SYSTEM FOR GENERATING ELECTRICITY WITH CLOSED-LOOP CIRCULATION OF CARBONATED SPECIES

(30) Priorité: 30.03.2015 FR 1552685
(43) Date de publication de la demande: 07.02.2018
(73) Titulaire: Commissariat à l'Énergie Atomique et aux Énergies Alternatives, 75015 Paris (FR)
(72) Inventeur: REYTIER, Magali, 38250 Villars de Lans (FR); NOIROT LE BORGNE, Isabelle, 38950 Saint Martin Le Vinoux (FR); ROUX, Guilhem, 38120 Saint-Egreve (FR)
(74) Mandataire: Nony
(86) Numéro de dépôt international: PCT/EP2016/056885
(87) Numéro de publication internationale: WO 2016/156374

(56) Documents cités:
- WO-A1-2008/123968
- WO-A1-2013/029701
- JP-A- 2012 219 233
- KR-A- 20120 050 319

## Description

### Domaine technique

La présente invention concerne le domaine des piles à combustibles à oxydes solides (SOFC acronyme anglais pour « *Solid Oxide Fuel Cell* »).

Elle concerne plus généralement un nouveau système de production d'électricité comprenant une telle pile et un réservoir de stockage d'hydrogène.

L'invention s'applique particulièrement avec un réservoir de stockage réversible d'hydrogène, de préférence contenant des hydrures et de préférence encore des hydrures métalliques, tels que MgH2.

Une partie du système selon l'invention peut avantageusement être utilisée en mode inverse, avec les cellules électrochimiques constituant un électrolyseur EHT, le réservoir servant alors à stocker l'hydrogène produit par l'électrolyse de l'eau à haute température (EHT, ou EVHT pour électrolyse de la vapeur d'eau à haute température, ou HTE acronyme anglais pour « *High Temperature Electrolysis* », ou encore HTSE acronyme anglais pour *« High Temperature Steam Electrolysis* ») également à oxydes solides (SOEC, acronyme anglais pour « *Solid Oxide Electrolysis Cell »).*

### Art antérieur

Une pile à combustible SOFC ou un électrolyseur EHT est généralement constitué(e) d'un empilement de motifs élémentaires (aussi appelés SRU pour « *Single Repeat Unit»)* comportant chacun une cellule électrochimique à oxydes solides, constituée de trois couches superposées l'une sur l'autre anode/électrolyte/cathode, et de plaques d'interconnexion en alliages métalliques aussi appelées plaques bipolaires, ou interconnecteurs.

Les interconnecteurs ont pour fonction d'assurer à la fois le passage du courant électrique et la circulation des gaz au voisinage de chaque cellule (vapeur d'eau injectée, hydrogène et oxygène extrait dans un électrolyseur EHT ; air et hydrogène injectés et eau extraite dans une pile SOFC) et de séparer les compartiments anodiques et cathodiques qui sont les compartiments de circulation des gaz du côté respectivement des anodes et des cathodes des cellules.

Une pile à combustible dégage usuellement beaucoup de chaleur en raison de l'oxydation de l'hydrogène en son sein qui est une réaction fortement exothermique.

Aussi, il est nécessaire de refroidir une pile à combustible fonctionnant à l'hydrogène.

Les piles alimentées en hydrogène et fonctionnant à relativement basse température sont classiquement refroidies par un circuit d'eau liquide.

Cette solution est inenvisageable pour une technologie de pile en SOFC car les températures de fonctionnement de cette dernière sont usuellement comprises entre 700°C et 900°C.

A ce jour, plusieurs solutions techniques permettent de répondre à cette difficulté.

La première consiste à augmenter les débits de gaz, notamment du côté du comburant, en général de l'air pour thermaliser la pile, c'est-à-dire pour tenter d'équilibrer les températures en son sein. Mais, cela présente de nombreux inconvénients.

En effet, les forts débits qu'il est nécessaire de faire circuler pour évacuer la chaleur par les gaz ont plusieurs impacts défavorables sur la pile.

Tout d'abord, lorsqu'on doit comprimer un fort débit de comburant (air), cela conduit à une baisse importante de rendement de la pile.

Ensuite, les forts débits conduisent à des niveaux de pression en entrée d'empilement de la pile qui peuvent s'avérer rédhibitoires pour la tenue des joints d'étanchéité.

Enfin, un fort débit d'air associé à un faible débit de combustible pour maintenir un rendement électrique élevé, c'est-à-dire un ratio entre la puissance électrique produite et la puissance calorifique des gaz entrant, peut engendrer des déséquilibres de pression notables entre chambres combustible/comburant.

C'est pourquoi, la solution de gestion thermique classique de ce type de pile à combustible haute température consiste à l'alimenter directement en méthane et vapeur d'eau pour profiter de la réaction endothermique de reformage se produisant au contact de l'électrode en cermet à base de nickel-zircone.

Cette solution est adoptée naturellement lorsque la pile est couplée au réseau de distribution de gaz (méthane). De plus, l'emploi de cellules de la pile dont le support est le cermet à base de nickel-zircone est favorable à l'application de cette solution. En effet, avec un tel support, il est possible d'en mettre une épaisseur suffisante, typiquement supérieure à 500µm, de telle sorte que la quantité de nickel est suffisante pour pouvoir effectuer le reformage quasi-total du méthane au sein de la pile.

Or, si pour des raisons techniques et/ou économiques, il n'est pas possible de coupler directement une pile à combustible SOFC à un réseau de distribution de méthane, on se retrouve alors dans la solution classique d'alimentation en hydrogène pur avec les inconvénients afférents comme mentionné ci-dessus.

Par ailleurs, le fonctionnement d'une pile SOFC directement alimentée par du méthane génère du dioxyde de carbone CO₂ dont le rejet a un impact vis-à-vis de l'environnement.

Les demandes de brevet KR 2012-0050319 A et JP 2012-219233 décrivent un système comprenant une pile à combustible SOFC couplée à deux réacteurs de méthanation pour la première et à un réacteur photocatalytique pour la deuxième.

La demande de brevet WO 2008/123968 A1 décrit un empilement de pile à combustible SOFC avec reformage interne au sein de l'empilement.

La demande de brevet US20090291336 décrit l'utilisation d'un réacteur de méthanation couplé à une pile à combustible SOFC afin de pouvoir utiliser du kérosène non utilisable en tant que tel comme combustible par la pile, le kérosène étant au préalable réformé avec de la vapeur d'eau dans un réacteur de reformage en amont de celui de méthanation.

La demande de brevet EP 1768207 décrit également l'utilisation d'un réacteur de méthanation couplé à une pile à combustible SOFC afin de pouvoir utiliser de l'éthanol non utilisable en tant que tel comme combustible par la pile. Il s'agit ici aussi d'enrichir uniquement en méthane le gaz reformé.

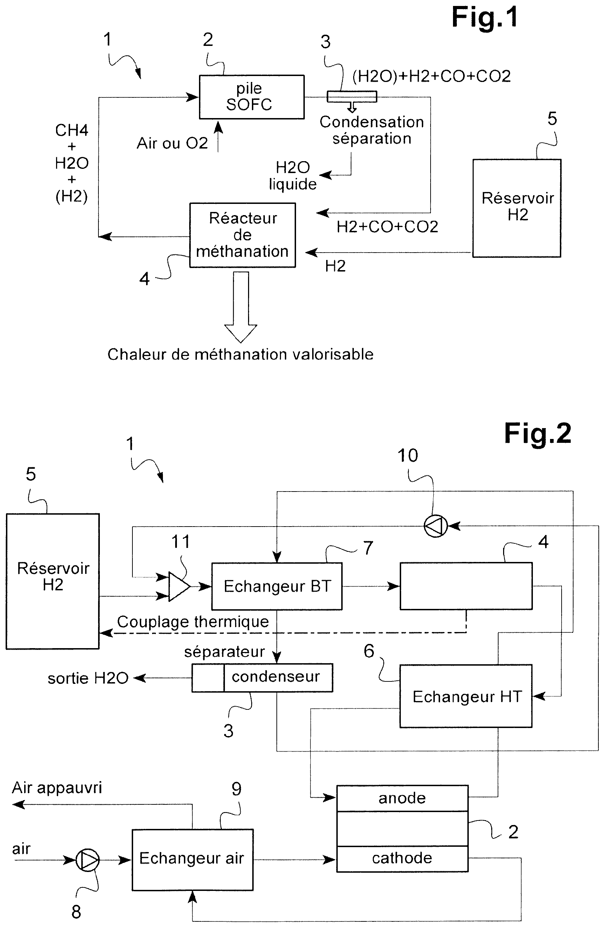

Le brevet US 7482078 B2 décrit un système de production d'hydrogène réversible par circulation d'un combustible gazeux contenant des éléments carbone C et hydrogène C, tel que du méthane, au travers d'une pile à combustible SOFC, un dispositif de séparation étant agencé en sortie de pile SOFC pour extraire l'hydrogène produit en sortie de cathode de pile, dans le but premier de le stocker. Selon un mode de réalisation, en reprenant les références de ce brevet, il est prévu une boucle de réinjection référencée 112 aux figures 1A à 1D, pour réinjecter exclusivement l'hydrogène H₂ soit en amont de la pile référencée 110 (figures 1A, 1C, 1D) soit dans un reformeur référencé 124 lui-même en amont de la pile 110. En mode de fonctionnement d'électrolyse, inverse à celui de la pile à combustible SOFC, selon un mode de réalisation, un réacteur de Sabatier référencé 30 en figure 7 est agencé en sortie d'anode de l'électrolyseur référencé 10, dans le but premier de stocker du méthane produit par la réaction de Sabatier au sein du réacteur 30. Toujours selon ce mode de fonctionnement d'électrolyse, un dispositif de séparation référencé 113 est agencé en aval du réacteur 30 pour extraire l'hydrogène produit au sein du réacteur de Sabatier et le réinjecter exclusivement en amont de ce réacteur 30.

Il existe donc un besoin pour améliorer les systèmes de production d'électricité comprenant un réservoir de stockage d'hydrogène et une pile à combustible à oxyde solides (SOFC), fonctionnant à haute température, typiquement entre 600°C et 1000°C, notamment afin de pallier les inconvénients d'une gestion thermique par une alimentation à forts débits d'une pile SOFC directement alimentée en hydrogène, et lorsqu'un couplage direct à un réseau de distribution de méthane n'est pas techniquement et/ou économiquement envisageable, ou notamment afin de pallier les inconvénients de rejet de CO₂ des piles SOFC alimentées directement par du méthane.

Le but de l'invention est de répondre au moins en partie à ce besoin.

### Exposé de l'invention

Pour ce faire, l'invention concerne, sous l'un de ses aspects, un système réversible de production d'électricité par pile à combustible de type à oxydes solides (SOFC) comprenant :
- une pile à combustible (SOFC) comprenant au moins une cellule électrochimique élémentaire à oxydes solides formée chacune d'une cathode, d'une anode et d'un électrolyte intercalé entre la cathode et l'anode ;
- un séparateur de phase gaz-liquide, relié à la sortie de la pile à combustible;
- un réacteur de méthanation, adapté pour mettre en œuvre une réaction de méthanation, dont l'entrée est reliée à la sortie du séparateur de phase et dont la sortie est reliée à l'entrée de la pile à combustible de sorte que le mélange issu du réacteur de méthanation est introduit dans la pile à combustible;
- un réservoir de stockage réversible d'hydrogène, adapté pour stocker de l'hydrogène, dont la sortie est reliée à l'entrée du réacteur de méthanation ;
le système étant configuré de telle sorte à faire circuler dans ledit système les espèces carbonées transformées à la fois dans la pile à combustible et dans le réacteur de méthanation, en boucle fermée.

Autrement dit, l'invention consiste à alimenter en hydrogène un réacteur de méthanation relié en boucle fermée à une pile à combustible SOFC. L'hydrogène rajouté depuis le réservoir de stockage sert à compenser l'eau liquide qui est enlevée par le séparateur gaz-liquide en aval de la pile à combustible SOFC. Ce séparateur est adapté pour séparer l'eau du mélange de gaz comprenant principalement de l'hydrogène (H2), du monoxyde de carbone (CO), et du dioxyde de carbone (CO₂), à la sortie de la pile à combustible. Le mélange de gaz peut en outre comprendre du méthane (CH₄) lorsque le reformage n'est pas total au sein de la pile à combustible.

Ainsi, grâce au système selon l'invention, il est possible d'utiliser 100% du combustible sorti du réservoir tout en faisant circuler l'intégralité des espèces carbonées en boucle fermée sur elle-même.

Autrement dit, avec un système selon l'invention, non seulement on s'affranchit des inconvénients d'une pile SOFC directement alimentée en hydrogène, en particulier ceux liés à la nécessité d'alimentation en forts débits en comburant, et ce sans avoir recours à un réseau de distribution de méthane, mais en plus, il n'y aucun rejet de CO ou de CO₂ en sortie de pile, comme selon l'état de l'art, puisqu'ici les espèces carbonées circulent en boucle fermée.

En ce qui concerne le fonctionnement proprement dit du système, dans la gamme des températures préférentiellement envisagées entre 700 et 900°C pour la pile à combustible, la réaction de reformage au sein de la pile est endothermique, alors que l'oxydation de l'hydrogène est exothermique.

Le choix du débit de méthane entrant et du point de fonctionnement (I-U) de la pile permet de régler l'exothermicité globale de la pile, voire même un fonctionnement autotherme. Un fort débit de méthane associé à une forte densité de courant peut conduire à un fort gradient thermique au sein de la pile, notamment dans le plan des cellules entre l'entrée et la sortie. L'homme de l'art peut appliquer des solutions de design connues permettant d'homogénéiser la température au sein de la pile.

Les avantages du système selon l'invention sont nombreux parmi lesquels on peut citer :
- la réalisation de la réaction de reformage et son inverse, la méthanation à la fois au sein d'un même système et au sein de composants (réacteurs) indépendants permet d'avoir une source froide et une source chaude bien distinctes tout en étant reliées l'une à l'autre. Ainsi, plutôt que de faire fonctionner une pile SOFC en hydrogène comme classiquement, qui peut engendrer une réaction fortement exothermique pour laquelle il est malgré tout difficile d'évacuer et de valoriser la chaleur par les gaz, la pile SOFC selon l'invention peut être en fonctionnement nominal quasiment isotherme et la source chaude à valoriser est fournie par le réacteur de méthanation. Cette chaleur est alors plus maîtrisable par l'intermédiaire du circuit de refroidissement du réacteur de méthanation, c'est-à-dire par l'intermédiaire d'un circuit fluidique en métal dédié. On évite ainsi les risques de perte des joints de la pile à fort débit, et les risques de casse de cellules fragiles comme dans un système selon l'état de l'art où la pile SOFC est directement alimentée en hydrogène ;
- la séparation des fonctions thermiques dans un système selon l'invention, associée à une utilisation à 100% du combustible sorti du réservoir via une boucle de circulation des gaz fermée sur elle-même offre une grande plage de fonctionnement et donc une grande flexibilité de fonctionnement pour une pile SOFC. En effet :
   - la densité de courant produite par la pile est dépendante du débit d'hydrogène fourni par le réservoir ;
   - le débit total des gaz circulant dans le système, notamment le débit de méthane, pilote la source froide au sein de la pile et surtout la source chaude valorisable dégagée par le réacteur de méthanation ;
   - l'écart entre ces deux débits (débit total dans la boucle fermée, débit d'hydrogène depuis le réservoir) correspond au taux d'utilisation du combustible qui traverse effectivement la pile par rapport à celui effectivement consommé et donc sorti du réservoir. Ce taux d'utilisation permet de piloter la chaleur fournie par le système pour une puissance électrique de pile donnée.
   - pour un débit d'hydrogène sorti du réservoir donné et donc pour une densité de courant donnée, plus ce taux d'utilisation de l'hydrogène total circulant est bas, plus la pile produira de l'électricité plutôt que de la chaleur, et donc avec un meilleur rendement et plus la quantité de chaleur produite par le réacteur de méthanation est importante. Ainsi, un système selon l'invention s'affranchit des inconvénients d'autres systèmes à piles SOFC selon l'état de l'art, dans lesquels les forts rendements sont atteints nécessairement avec des fort taux d'utilisation, susceptibles d'endommager la pile et dans lesquels une partie de combustible est généralement brûlée en sortie pour limiter les émissions de CO ou pour générer la chaleur requise ;
- le pilotage de fonctionnement du système selon l'invention peut aussi être réalisé en modifiant la température du réacteur de méthanation, ce qui modifie la quantité de méthane CH₄ formée et donc le ratio entre hydrogène et méthane (H₂/CH₄) en entrée de pile ;
- la puissance électrique produite par la pile peut être découplée de la chaleur disponible valorisable au sein du système en ajustant le taux d'utilisation du combustible par rapport au débit d'H₂ sortant du réservoir ;
- une sur-stochiométrie d'hydrogène permet de réduire la chaleur dégagée par la méthanation au profit d'une exothermicité supérieure pour la pile. On peut ainsi envisager une meilleure gestion de la dégradation dans le temps de la pile SOFC, en compensant sa baisse de performance pour une température supérieure, ou en optimisant la préchauffe des gaz d'entrée de pile par un échange thermique entre l'entrée et la sortie ;
- la gestion thermique de la pile SOFC selon l'invention à une température maximale de 850°C offre un fonctionnement possible à une température d'entrée supérieure (800°C au lieu de 700°C), lui conférant un rendement électrique bien meilleur que selon l'état de l'art. En effet, la difficulté de refroidissement en hydrogène pur dans un système à pile SOFC selon l'état de l'art impose généralement une température d'entrée maximale à 700°C ;
- le débit d'air ne sert qu'à fournir le comburant nécessaire à la pile SOFC selon l'invention. Autrement dit, il n'a pas une fonction importante de refroidissement comme dans les systèmes à pile SOFC selon l'état de l'art alimentés directement en hydrogène, i.e. sans boucle fermée de circulation d'espèce carbonées et sans réacteur de méthanation selon l'invention ;
- la (re)circulation du combustible est simple à réaliser dans un système selon l'invention; car les mélanges de gaz circulant sont secs, puisque toute l'eau en sortie de pile étant évacuée par condensation. Les auxiliaires (pompes) de recirculation sont alors moins coûteux que dans les systèmes selon l'état de l'art. L'eau nécessaire au reformage interne est apportée par la réaction de méthanation elle-même. L'invention se distingue donc aussi des systèmes à piles SOFC classiques dans lesquels l'eau formée par la pile est utilisée pour reformer le combustible en interne, ce qui impose une recirculation difficile à réaliser de la vapeur d'eau.

Par « réversible », on entend dans le cadre de l'invention que la pile à combustible SOFC peut être utilisée en tant qu'électrolyseur EHT en mode de fonctionnement d'électrolyse, inverse à celui de la pile, l'(les) anode(s) de la pile SOFC jouant alors le rôle de cathode(s) de l'électrolyseur.

En mode de fonctionnement en tant que pile à combustible SOFC selon l'invention, il n'y a pas de stockage d'hydrogène dans le réservoir alimentant le réacteur de méthanation. En outre, la chaleur dégagée par la réaction de méthanation peut servir au système, notamment en étant apportée au réservoir de stockage d'hydrogène pour désorber celui-ci.

En mode de fonctionnement d'électrolyse EHT selon l'invention, aucune réaction de méthanation n'est mis en œuvre et le réservoir est utilisé uniquement pour stocker l'hydrogène produit par l'électrolyse. En outre, la chaleur dégagée par le stockage de l'hydrogène peut servir au système, notamment en étant apportée au générateur de vapeur en amont de l'électrolyseur EHT.

Selon un mode de réalisation avantageux, la pile est un réacteur à empilement de cellules électrochimiques élémentaires de type SOFC formées chacune d'une cathode, d'une anode et d'un électrolyte intercalé entre la cathode et l'anode, et une pluralité d'interconnecteurs électrique et fluidique agencés chacun entre deux cellules élémentaires adjacentes avec une de ses faces en contact électrique avec la cathode d'une des deux cellules élémentaires et l'autre de ses faces en contact électrique avec l'anode de l'autre des deux cellules élémentaires.

Chaque anode de la pile est constituée d'un cermet de nickel-zircone stabilisée à l'oxyde d'yttrium (Ni-YSZ).

Le réacteur de méthanation comprend de préférence un catalyseur solide de méthanation étant à base de nickel (Ni) supporté par un oxyde de zirconium (ZrO2), ou à base de nickel (Ni) supporté par un oxyde d'aluminium (Al₂O₃), ou bimétallique à base de nickel (Ni) et de fer (Fe) supporté par un oxyde d'aluminium (Al₂O₃), de préférence Ni-Fe/γ- Al₂O₃, ou à base de nickel (Ni) supporté par des oxydes mixtes de Cérium (Ce) et de zirconium, de préférence Ce_{0.72}Zr_{0.28}O₂.

Le réservoir d'hydrogène peut être un réservoir de stockage sous forme solide, contenant préférentiellement des hydrures métalliques, de préférence des hydrures de magnésium (MgH₂), la pression du réservoir étant alors comprise entre 2 et 15 bars, de préférence entre 8 et 12 bars dans le cas des hydrures de magnésium, ou un réservoir de stockage sous forme d'hydrogène gazeux, de préférence comprimé entre 200 et 700 bars, de préférence encore entre 350 et 700 bars.

Avantageusement, le système comprend au moins un premier échangeur de chaleur, adapté pour préchauffer en entrée de pile à combustible les gaz provenant du réacteur de méthanation à partir de la chaleur dégagée par les gaz en sortie de la pile à combustible.

Avantageusement encore, le système comprend au moins un deuxième échangeur de chaleur, adapté pour préchauffer en entrée de réacteur de méthanation les gaz provenant du réservoir d'hydrogène et/ou séparateur de phase gaz-liquide, à partir de la chaleur dégagée par les gaz en sortie de la pile après le premier échangeur.

Dans le système selon l'invention, deux niveaux de température sont requis : un premier niveau à relativement basse température, typiquement entre 400 et 500°C pour la réaction de méthanation et un deuxième à relativement haute température, typiquement compris entre 700 et 800°C pour le fonctionnement de la pile à combustible. Ainsi, l'utilisation du premier et du deuxième échangeur de chaleur permet de gérer au mieux ces deux niveaux de température différents.

L'invention a également pour objet un procédé de fonctionnement en continu du système réversible décrit précédemment, comprenant les étapes simultanées suivantes:
- désorption de l'hydrogène du réservoir pour alimenter l'entrée du réacteur de méthanation ;
- fonctionnement du réacteur de méthanation;
- fonctionnement de la pile à combustible dans une gamme de température en entrée comprise entre 700°C et 800°C ;
- fonctionnement du séparateur gaz-liquide de sorte à séparer l'eau du mélange de gaz comprenant principalement de l'hydrogène (H2) du monoxyde de carbone (CO) et du dioxyde de carbone (CO₂), à la sortie de la pile à combustible,
procédé dans lequel le débit molaire de l'hydrogène en sortie de réservoir qui alimente l'entrée du réacteur de méthanation est sensiblement égal à celui oxydé en eau dans la pile à combustible et condensé dans le séparateur.

De préférence, on mélange l'hydrogène issu du réservoir avec le mélange de de gaz constitué par de l'hydrogène (H2) du monoxyde de carbone (CO) et du dioxyde de carbone (CO₂), issu de la pile à combustible, avant leur injection dans le réacteur de méthanation. L'écart entre le débit d'hydrogène circulant et le débit d'hydrogène sorti du réservoir permet une flexibilité de fonctionnement du système notamment pour une flexibilité en puissance électrique produite sans demander à la pile un taux d'utilisation du carburant trop important.

De préférence encore, on ajuste le débit de méthane (CH₄) en sortie de réacteur de méthanation et on choisit le point de fonctionnement nominal courant-tension (I, U) de la pile à combustible (SOFC) de sorte à obtenir un régime de fonctionnement autotherme de la pile à combustible (SOFC).

Selon encore une autre variante avantageuse, on récupère au moins une partie de la chaleur dégagée par le réacteur de méthanation et on la fournit au réservoir d'hydrogène afin de désorber l'hydrogène. S'il s'agit d'un réservoir d'hydrogène gazeux sous pression, cette chaleur à environ 400°C peut être valorisée sous d'autres formes de cogénération.

L'invention concerne enfin l'utilisation d'une partie du système réversible décrit précédemment pour produire et stocker de l'hydrogène à haute température, dans laquelle :
- la(les) cellule(s) est (sont) mises en œuvre en tant que cellule(s) d'électrolyse en constituant un électrolyseur à haute température (EHT) ;
- la sortie de l'électrolyseur EHT est reliée au réservoir de stockage d'hydrogène.
- s'il s'agit d'un réservoir hydrogène sous forme d'hydrures, la chaleur dégagée à l'absorption est utilisée pour vaporiser l'eau nécessaire à l'électrolyseur.

Dans cette utilisation, le deuxième échangeur de chaleur est de préférence adapté pour préchauffer en entrée d'électrolyseur EHT la vapeur d'eau issue du générateur de vapeur à partir de la chaleur dégagée par l'hydrogène et/ou la vapeur d'eau en sortie d'électrolyseur EHT.

### Description détaillée

D'autres avantages et caractéristiques de l'invention ressortiront mieux à la lecture de la description détaillée d'exemples de mise en œuvre de l'invention faite à titre illustratif et non limitatif en référence aux figures suivantes parmi lesquelles :
- la figure 1 est une vue schématique du principe du système de production d'électricité par pile à combustible SOFC selon l'invention;
- la figure 2 est une vue schématique d'un exemple de système de production d'électricité par pile à combustible SOFC selon l'invention
- la figure 3 est une vue schématique est une vue schématique d'un exemple de production par électrolyse de l'eau EHT et de stockage d'hydrogène produit, mettant en œuvre en mode inversé une partie du système de la figure 2.

Dans l'ensemble de la présente demande, les termes « entrée », « sortie » « aval » et « amont » sont à comprendre en référence au sens de circulation en boucle fermée des gaz à travers respectivement la pile à combustible SOFC et le réacteur de méthanation. En mode électrolyseur EHT, ces mêmes termes sont à comprendre en référence au sens de circulation de la vapeur d'eau et l'air alimentant l'électrolyseur, et de l'hydrogène et l'oxygène qui y sont produits.

On précise également que la pile à combustible décrite est de type à oxydes solides (SOFC, acronyme anglais de « *Solid Oxyde Fuel Cell* ») fonctionnant à haute température. Ainsi, tous les constituants (anode/électrolyte/cathode) d'une cellule d'électrolyse sont des céramiques.

Typiquement, et de préférence, les caractéristiques d'une cellule électrochimique élémentaire SOFC convenant à une pile selon l'invention, du type anode support (ASC, acronyme anglais pour « *Anode Support Cell* »), peuvent être celles indiquées comme suit dans le tableau 1 ci-dessous.

**TABLEAU 1**

| **Cellule électrochimique** | **Unité** | **Valeur** |
|---|---|---|
| **Anode** | | |
| Matériau constitutif | | Ni-YSZ |
| Epaisseur | µm | >500 |
| Conductivité thermique | W m⁻¹ K⁻¹ | 13,1 |
| Conductivité électrique | Ω⁻¹ m⁻¹ | 10⁵ |
| Porosité | | 0,37 |
| Perméabilité | m² | 10⁻¹³ |
| Tortuosité | | 4 |
| Densité de courant | A.m⁻² | 5300 |

| **Cathode** | | |
|---|---|---|
| Matériau constitutif | | LSM |
| Epaisseur | µm | 20 |
| Conductivité thermique | W m⁻¹ K⁻¹ | 9,6 |
| Conductivité électrique | Ω⁻¹ m⁻¹ | 1 10⁴ |
| Porosité | | 0,37 |
| Perméabilité | m² | 10⁻¹³ |
| Tortuosité | | 4 |
| Densité de courant | A.m⁻² | 2000 |

| **Electrolvte** | | |
|---|---|---|
| Matériau constitutif | | YSZ |
| Epaisseur | µm | |
| Résistivité | Ω m | 0,42 |

Une pile à combustible SOFC convenant à l'invention est de préférence un réacteur à cellules électrochimiques élémentaires Cl, C2, de type à oxyde solide (SOFC) empilées alternativement avec des interconnecteurs. Chaque cellule est constituée d'une cathode et d'une anode, entre lesquelles est disposé un électrolyte.

Jusqu'à présent, les systèmes de piles à combustible SOFC fonctionnent à haute température soit avec une pile alimentée en hydrogène pur, soit directement en méthane et en vapeur d'eau.

La première voie classique d'alimentation en hydrogène pur présente la contrainte majeure de refroidissement nécessaire dû à la réaction exothermique de l'oxydation de l'hydrogène.

Les solutions pour y parvenir présentent de nombreux inconvénients.

La deuxième voie classique d'alimentation en méthane et vapeur d'eau permet de surmonter cette contrainte majeure car en utilisant un type d'anode en cermet Nickel-Zircone, elle met à profit la réaction endothermique de reformage à cette anode.

Si cette deuxième voie apparaît naturelle, lorsque la pile à combustible SOFC peut être couplée facilement à un réseau de distribution de méthane, elle ne peut à contrario être retenue lorsque ce n'est pas techniquement et/ou économiquement envisageable.

Ainsi, il subsiste toujours la contrainte majeure de refroidissement d'une pile à combustible SOFC lorsque cette dernière ne peut être alimentée qu'à partir d'un réservoir d'hydrogène, ce qui concerne un grand nombre d'applications.

Aussi, les inventeurs ont judicieusement pensé à agencer un réacteur de méthanation entre une pile à combustible SOFC et un réservoir de stockage d'hydrogène.

On peut alors faire fonctionner la pile SOFC avec du méthane CH₄ produit par hydrogénation dans le réacteur de méthanation avec l'avantage majeur de faire circuler en boucle fermée, les espèces carbonées transformées à la fois dans la pile et dans le réacteur de méthanation.

Un système 1 selon l'invention mettant en œuvre une telle circulation d'espèces carbonées en boucle fermée est représenté schématiquement en figure 1.

Ainsi, le système 1 comprend respectivement en boucle fermée d'amont en aval, une pile à combustible SOFC 2, un dispositif de condensation/séparation 3, un réacteur de méthanation 4.

Ainsi, l'entrée de la pile SOFC 2 est reliée à la sortie du réacteur de méthanation 4. L'entrée du réacteur de méthanation 4 est elle-même reliée à la sortie de la pile SOFC 2.

Le dispositif de condensation/séparation 3 étant relié en aval à la sortie de la pile 2 et en amont au réacteur de méthanation 4.

En outre, l'entrée du réservoir de méthanation 4 est reliée à la sortie d'un réservoir de stockage réversible d'hydrogène 5.

Comme montré en figure 1, la chaleur qui se dégage du réacteur de méthanation peut être valorisée. Notamment, elle peut avantageusement être utilisée en partie dans la boucle du système selon l'invention, comme décrit ci-après.

Au préalable de son fonctionnement nominal, le système 1 fonctionne de la manière suivante.

La pile 2 fonctionne à faible courant et à bas taux d'utilisation en hydrogène pur. L'hydrogène non consommé circule en boucle fermée au sein du système 1. L'hydrogène consommé dans la boucle est remplacé par de l'hydrogène provenant du réservoir 5 et produit de l'eau qui est condensée.

En amont du réacteur de méthanation 4, on introduit une quantité de CO₂ par paliers de manière à atteindre la quantité fixée, c'est-à-dire à une valeur de débit d'H₂ divisée par 4.

Pendant l'introduction de cette quantité de CO₂ par paliers, la pile 2 reçoit alors un mélange de CH₄ + H₂O + H₂ jusqu'à ne plus recevoir d'hydrogène en tête.

Le courant est alors augmenté progressivement par paliers de manière à compenser l'endothermicité du reformage interne du CH₄.

Une fois la quantité cible de CO₂ introduite, l'injection du CO₂ est arrêtée et la quantité de carbone tourne au sein du système en boucle fermée.

Le fonctionnement nominal en boucle fermée d'un système 1 en mode pile SOFC selon l'invention est le suivant.

L'hydrogène délivré par le réservoir 5 et la quantité requise de dioxyde de carbone CO₂ introduit initialement en entrée du réacteur de méthanation 4 produisent du méthane et de l'eau (CH₄ + H₂O) avec le cas échéant de l'hydrogène en sur-stochiométrie provenant du réservoir 5.

En effet au sein du réacteur 4 contenant un catalyseur solide de la réaction de méthanation, les réactions suivantes sont possibles dans la gamme de température des 400 à 500°C.

Une unique réaction d'hydrogénation du CO₂ (1) peut avoir lieu selon l'équation suivante :

*CO*₂ + 4*H*₂ → *CH*₄ + 2*H*₂*O* .(1)

Il peut aussi se produire à la fois une réaction d'hydrogénation du CO₂ (2) et une réaction dite de réaction inverse du gaz à l'eau (« Reverse Water Gas Shift » en anglais) (3) selon les équations suivantes :

*CO*₂ + *H*2 → *CO* + *H*₂*O* (2)

*CO* + 3*H*2 → *CH*₄ + *H*₂*O.* (3)

Il va de soi que l'on peut avoir dans le cadre de l'invention une méthanation totale ou non, au sein du réacteur 4. Dans le cas où la méthanation n'est pas totale, alors il reste de l'hydrogène à sa sortie, et les performances de la pile sont accrues par la présence de cet hydrogène mais la gestion thermique visée par l'invention sera moindre que dans le cas d'une méthanation totale.

Le mélange de gaz CH₄ + H₂O + (H₂) issu du réacteur 4 est ensuite introduit en entrée de pile à combustible 2. Il se produit alors au sein de la pile 2 les réactions (1), (2) et (3) en sens inverse.

Ainsi, il se produit une réaction de reformage transformant le méthane et l'eau en hydrogène et monoxyde de carbone (H₂ + CO), combustibles utilisables par la pile. Le fonctionnement électrochimique de la pile 2 conduit à oxyder ces espèces en eau et dioxyde de carbone (H₂O + CO₂), la pile étant alimentée simultanément en comburant qui est apporté par de l'air ou de l'oxygène.

Comme indiqué ci-dessus, la pile 2 met en œuvre une (des) cellule(s) dont le support (anode) est un cermet à base de Ni-YSZ, ce qui permet un reformage total du méthane CH₄ au sein de la pile. Ainsi, le gaz en sortie de la pile est constitué d'un mélange d'hydrogène H₂ et du CO non utilisés au sein de la pile ainsi que du CO₂ et d'H2O formés par la pile.

Il va de soi que l'on peut aussi avoir dans le cadre de l'invention un reformage qui n'est pas total au sein de la pile 2. Dans ce dernier cas, seules les performances de la pile 2 sont en partie affectées par potentiellement moins d'hydrogène en présence et une dilution par le méthane CH₄.

A la sortie de la pile 2, l'eau est retirée par condensation au sein du dispositif de condensation/séparation 3.

En sortie du dispositif 3, le mélange de gaz de sortie sec, est alors réinjecté au sein du réacteur de méthanation et il est complété par de l'hydrogène issu du réservoir 5.

Selon l'invention, le débit molaire d'hydrogène issu du réservoir 5 correspond à celui qui est oxydé en eau au sein de la pile 2, et donc à celui de l'eau condensée et évacuée par le dispositif 3.

La recirculation des gaz secs de sortie étant totale, le débit circulant au sein de la pile 2 peut être bien plus important que celui issu du réservoir 5. Le taux d'utilisation de l'hydrogène au sein du système 1 est de 100% (pas d'hydrogène perdu ni brûlé).

Ainsi, le système selon l'invention qui vient d'être décrit permet une utilisation des espèces carbonées en circuit fermé dans leur totalité. Il n'y a donc ni rejet de CO, ni de rejet de CO₂ en sortie de pile 2 en régime nominal.

Pour mettre en évidence le fort intérêt que présente l'invention, les inventeurs ont réalisé le dimensionnement d'un système avec un réservoir de stockage réversible de de l'hydrogène 5 à base d'hydrures de magnésium MgH₂.

Ce type de stockage est avantageux car il permet d'utiliser au moins une partie de la chaleur dégagée par le réacteur de méthanation 4 en couplant ce dernier au réservoir 5. Un tel réservoir 5 contenant des hydrures MgH₂ fonctionne typiquement à une température de l'ordre de 380°C.

La désorption de l'hydrogène du réservoir 5 pour alimenter la pile à combustible 2 nécessite la fourniture de chaleur qui est donc avantageusement fournie par le réacteur de méthanation 4.

En outre, l'absorption de l'hydrogène dans le réservoir 5 est exothermique et peut permettre de vaporiser l'eau nécessaire lorsqu'une partie du système selon l'invention est utilisé en mode inverse d'électrolyse de l'eau (EHT).

Les inventeurs ont ainsi réalisé différents exemples selon l'invention et selon l'état de l'art, à titre comparatif à la fois pour le fonctionnement en mode pile SOFC et en mode d'électrolyseur EHT.

On précise que dans les tableaux ci-après, les valeurs ont été arrondies à l'unité supérieure.

### Exemples 1 et 2 selon l'invention :

Le système 1 selon l'invention comprend les éléments essentiels déjà décrits.

En outre, comme illustré en figure 2, le système 1 selon l'invention comprend tout d'abord un échangeur 6 à haute température (échangeur HT sur la figure 2).

Cet échangeur 6 est adapté pour préchauffer en entrée de pile à combustible 2 les gaz provenant du réacteur de méthanation 4, aux environs de 700°C, à partir de la chaleur dégagée par les gaz en sortie de la pile à combustible.

Le système 1 comprend en outre un autre échangeur de chaleur 7 à plus basse température (échangeur BT sur la figure 2).

Cet échangeur 7 est adapté pour préchauffer en entrée de réacteur de méthanation 4 les gaz provenant du réservoir d'hydrogène et/ou séparateur de phase gaz-liquide 3, à partir de la chaleur dégagée par les gaz en sortie après l'échangeur haute température.

Un compresseur d'air 8 est également prévu pour alimenter en air, en tant que comburant la pile à combustible 2.

L'air alimentant la pile 2 est réchauffé par l'air appauvri en sortie de pile 2 au moyen d'un autre échangeur 9.

Enfin, dans le circuit en boucle fermée, une pompe de circulation 10 est agencée pour faire circuler les mélanges de gaz de la pile à combustible 2 vers le réacteur de méthanation 4.

A titre de variante, comme illustré en figure 2, on peut prévoir un mélange entre le mélange de gaz sec (H₂+CO+CO₂) issu du condenseur 3 et l'hydrogène H₂ délivré par le réservoir 5 en amont de l'entrée du réacteur de méthanation 4.

Un tel mélange peut être réalisé par tout mélangeur de gaz 11 connu.

La réalisation de la pile selon l'invention et les conditions de fonctionnement nominal sont les suivantes.

La pile à combustible SOFC 2 comprend un empilement d'un nombre égal à 50 cellules de 100 cm² chacune.

Chaque cellule comprend une anode constituée d'un cermet Ni-YSZ d'au moins 500µm d'épaisseur permettant un reformage interne total dès 700°C.

La température en entrée de la pile 2 est de 700°C (exemple 1) ou 800°C (exemple 2).

La température maximale en sortie de la pile 2 est de 850°C, quelle que soit la température d'entrée.

Le débit de sortie du réservoir de stockage d'hydrogène 5 est de 1 Nm³/h pour une densité de courant sortant de la pile 2 de l'ordre de 0,5A/cm². A ce débit d'hydrogène d'1 Nm³/h, la chaleur à fournir au réservoir 5 est de l'ordre de 1kW.

Le débit d'alimentation en air de la pile 2 est de l'ordre de 12 à 30 Nml/min/cm².

Selon l'invention, on ajuste le débit de CO₂ circulant dans la boucle fermée entre la pile 2 et le réacteur de méthanation 4 au débit d'hydrogène circulant.

Ainsi, le débit de CO₂ est égal au débit H₂ divisé par 4 fois le taux d'utilisation du combustible provenant du réacteur de méthanation.

La puissance froide est disponible sans électricité, c'est-à-dire que le refroidissement est réalisé uniquement avec de l'eau industrielle disponible et donc sans avoir à utiliser une source de production de froid alimentée en électricité.

Les rendements des auxiliaires du système sont les suivants :
- rendement du convertisseur électrique du courant produit par la pile 2: 95%
- rendement des compresseurs 9, 10: 50%
- pertes de charges sur le balayage d'air d'alimentation de la pile 2 estimées à 10,8mbar/nml/min/cm².

### Exemple comparatif :

On considère une pile à combustible SOFC 2 alimentée directement par un réservoir en hydrogène 5 selon l'état de l'art.

Autrement dit, classiquement une pile SOFC 2 fonctionne avec de l'hydrogène pur en tant que combustible fourni directement par un réservoir 5.

L'air en tant que comburant est également comprimé par le même type de compresseur d'air 9.

Les conditions sont les mêmes que celles des exemples selon l'invention, à l'exception du débit d'alimentation en air de la pile 2 qui est de l'ordre de 48 Nml/min/cm² pour un courant de 0,5A/cm² si la pile est en H₂ pur.

Le bilan des calculs est indiqué dans le tableau 2 ci-dessous.

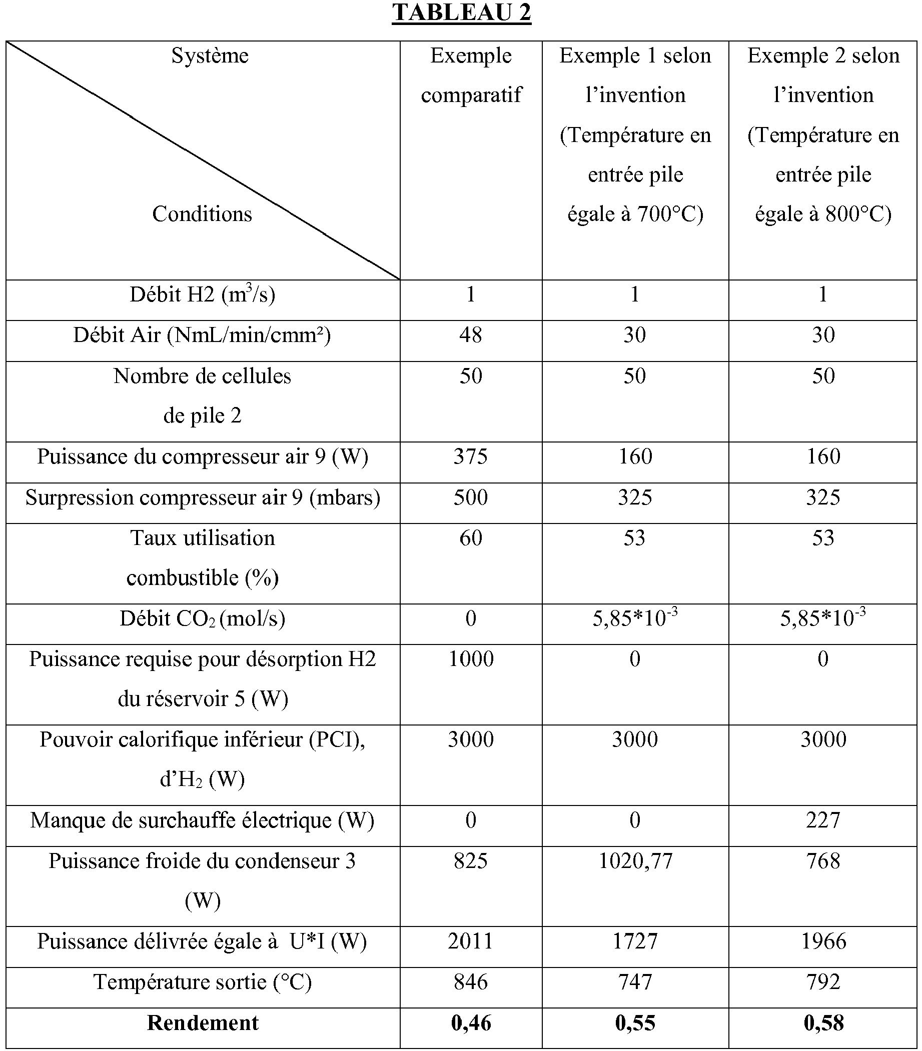

Il ressort de ce tableau 2, que le rendement d'une pile SOFC 2 directement alimentée en hydrogène pur selon l'état de l'art est de 46%.

On note également une consommation électrique pour les compresseurs d'air 9 et pour la désorption de l'hydrogène du réservoir 5 qui plus élevée pour un système à pile SOFC selon l'état de l'art (exemple comparatif) par rapport à un système selon l'invention (exemples 1 et 2).

De plus, le mode de fonctionnement nominal dans un système selon l'état de l'art impose un écart de température entre l'entrée et la sortie de la pile 2 de l'ordre de 150°C.

Dans le cas du mode pile selon l'invention, le rendement du système selon l'invention est de 55% à 700°C et de 58% à 800°C, soit un gain de rendement de plus de 10% par rapport à un système classique selon l'état de l'art avec alimentation directe d'une pile SOFC en hydrogène pur depuis un réservoir de stockage à hydrures. La chaleur dégagée par le réacteur de méthanation 4 est alors suffisante pour désorber l'hydrogène du réservoir 5. La pile 2 ne subit plus qu'un gradient de 50°C à 700°C et son fonctionnement est quasi autotherme à 800°C.

Les inventeurs ont également fait une analyse sur le mode électrolyseur EHT pour produire et stocker de l'hydrogène à haute température.

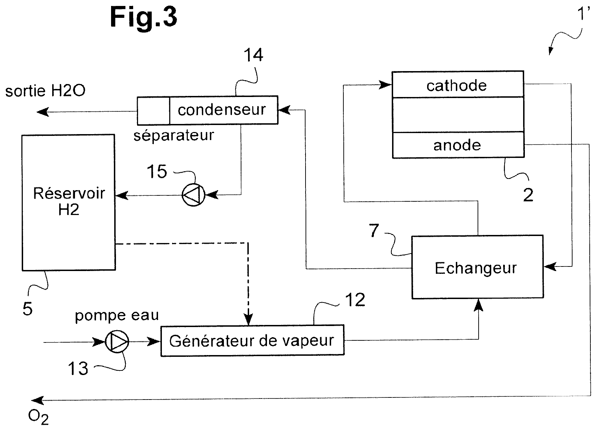

Ainsi, dans ce mode, l'empilement des cellules selon l'invention est mis en œuvre en tant que cellule(s) d'électrolyse en constituant un électrolyseur à haute température (EHT) 2, comme illustré en figure 3.

La sortie de l'électrolyseur EHT 2 est reliée au réservoir de stockage d'hydrogène 5.

La réalisation de l'électrolyseur EHT selon l'invention et les conditions de fonctionnement nominal sont les suivantes.

L'électrolyseur EHT 2 comprend un empilement d'un nombre égal à 50 cellules de 100 cm² chacune. Chaque cellule comprend une cathode constituée d'un cermet Ni-YSZ d'au moins 500µm d'épaisseur.

Le fonctionnement de l'électrolyseur 2 est autotherme aux environs de 700°C.

Le taux d'utilisation de la vapeur d'eau injectée dans l'électrolyseur 2 est de l'ordre de 75%.

La chaleur délivrée par le réservoir 5 et fournie à l'électrolyseur 2 est de l'ordre de 1kW pour un débit d'hydrogène de l'ordre de 1Nm³/h d'hydrogène.

La puissance froide est ici aussi disponible sans électricité.

Les rendements des auxiliaires du système sont les suivants :
- rendement du convertisseur électrique du courant fourni à l'électrolyseur 2: 95%
- rendement des compresseurs 9, 10: 50%.

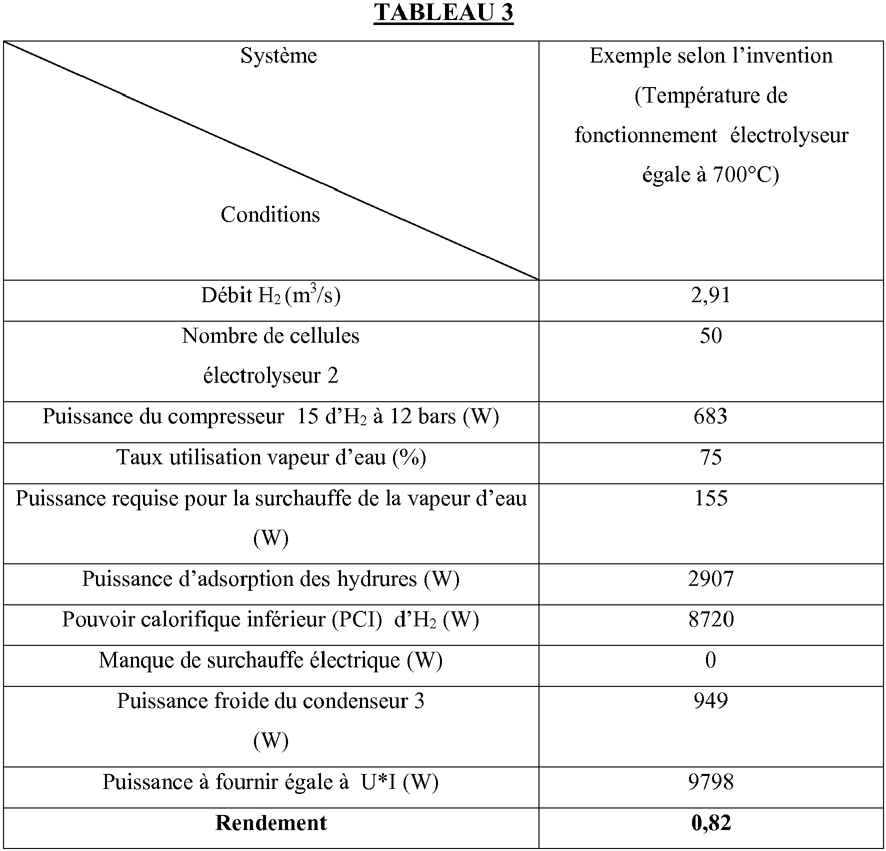

Avec les données ci-dessus, un système selon l'invention dont le fonctionnement est réversible en mode pile à combustible SOFC et en mode électrolyseur EHT à partir d'un réservoir réversible de stockage/déstockage d'hydrogène présente un rendement complet, i.e. avec retour à l'électricité disponible, de l'ordre de 48% (égal au rendement du tableau 2 de 0,58 multiplié par le rendement du tableau 3 égal à 82%), ce qui à la connaissance des inventeurs reste inégalé.

L'invention n'est pas limitée aux exemples qui viennent d'être décrits ; on peut notamment combiner entre elles des caractéristiques des exemples illustrés au sein de variantes non illustrées.

D'autres variantes et améliorations de l'invention peuvent être réalisées sans pour autant sortir du cadre de l'invention.

En particulier, la variation du débit de sortie du réservoir de stockage réversible d'hydrogène permettant une flexibilité en puissance de la pile à combustible SOFC selon l'invention n'a pas été illustrée.

Egalement, si le réservoir de stockage étudié dans les exemples illustrés selon l'invention est du type contenant des hydrures de magnésium MgH2, on peut tout-à-fait envisager d'autres types d'hydrure ou plus généralement tous types de stockage sous forme solide, sous forme liquide ou gazeuse.

Comme déjà évoqué, la réaction d'hydrogénation du CO₂ en grande partie et du CO en boucle fermée au sein du réacteur de méthanation est exothermique et a lieu dans une gamme de températures aux environs de 400 à 500°C. Cette chaleur permet ainsi avantageusement de préchauffer les gaz d'entrée du réacteur de méthanation, aux environs de 400°C, c'est-à-dire soit l'hydrogène (H2) issu du réservoir, soit le mélange de gaz H₂+CO+CO₂ issu du séparateur de phase qui permet la condensation. Il va de soi que l'on peut chercher à valoriser le reste de la chaleur dégagée par le réacteur de méthanation.

En ce qui concerne les réactions de méthanation au sein du réacteur, les catalyseurs utilisés peuvent être à base de Nickel supporté par un oxyde de zirconium (ZrO₂), ou à base de nickel (Ni) supporté par un oxyde d'aluminium (Al₂O₃). La publication [1] a mis en exergue l'activité catalytique importante pour un catalyseur à base de nickel (Ni) supporté par des oxydes mixtes de Cérium (Ce) et de zirconium de formule Ce_{0.72}Zr_{0.28}O₂. De même, la publication [2] a montré, pour une méthanation sous pression de 30 bars, l'excellente activité catalytique d'un catalyseur bimétallique à base de nickel (Ni) et de fer (Fe) supporté par un oxyde d'aluminium (Al2O3) de formule Ni-Fe/y- Al₂O₃.

Plusieurs types de réacteurs déjà éprouvés peuvent être envisagés pour mettre en œuvre la méthanation.

On peut citer tout d'abord les réacteurs à lit fixe dans lesquels le catalyseur solide est intégré sous forme de grains ou pastilles. L'inconvénient de ce type de réacteurs est la gestion thermique difficile à réaliser pour des réactions exothermiques comme la méthanation.

On peut citer également les réacteurs avec des canaux structurés tels que les réacteurs multitubulaires, les réacteurs monolithiques et les réacteurs à plaques, dans lesquels le catalyseur solide est généralement déposé sous forme de revêtement dans les canaux réactifs. Ces réacteurs sont bien adaptés pour une réaction de méthanation qui nécessite une bonne gestion thermique. Ils sont généralement plus onéreux.

Enfin, les réacteurs de type à lit fluidisé ou entrainé dans lesquels le catalyseur à fluidifier est sous forme de poudre. Ces réacteurs sont bien adaptés pour des réactions avec des volumes de réactifs très importants. De plus, la fluidisation du catalyseur permet une très bonne homogénéisation thermique du mélange de réactifs dans le réacteur et donc un meilleur contrôle thermique.

### Références citées

[1]: Fabien Ocampo et al, « Methanation of carbon dioxide over nickel-based Ce0.72Zr0.28O2 mixed oxide catalysts prepared by sol-gel method», Journal of Applied Catalysis A: General 369 (2009) 90-96 ;
[2]: Dayan Tiang et al, « Bimetallic Ni-Fe total-methanation catalyst for the production of substitute natural gas under high pressure », Journal of Fuel 104 (2013) 224-229.

## Revendications

1. Système (1) réversible de production d'électricité par pile à combustible de type à oxydes solides (SOFC) comprenant :
- une pile à combustible (SOFC) (2) comprenant au moins une cellule électrochimique élémentaire à oxydes solides formée chacune d'une cathode, d'une anode et d'un électrolyte intercalé entre la cathode et l'anode ;
- un séparateur de phase gaz-liquide (3), relié à la sortie de la pile à combustible ;
- un réacteur de méthanation (4), adapté pour mettre en œuvre une réaction de méthanation, dont l'entrée est reliée à la sortie du séparateur de phase et dont la sortie est reliée à l'entrée de la pile à combustible de sorte que le mélange issu du réacteur de méthanation est introduit dans la pile à combustible;
- un réservoir de stockage réversible d'hydrogène (5), adapté pour stocker de l'hydrogène, dont la sortie est reliée à l'entrée du réacteur de méthanation ;
le système étant configuré de telle sorte à faire circuler dans ledit système les espèces carbonées transformées à la fois dans la pile à combustible et dans le réacteur de méthanation, en boucle fermée.

2. Système (1) réversible selon la revendication 1, la pile étant un réacteur à empilement de cellules électrochimiques élémentaires de type SOFC formées chacune d'une cathode, d'une anode et d'un électrolyte intercalé entre la cathode et l'anode, et une pluralité d'interconnecteurs électrique et fluidique agencés chacun entre deux cellules élémentaires adjacentes avec une de ses faces en contact électrique avec la cathode d'une des deux cellules élémentaires et l'autre de ses faces en contact électrique avec l'anode de l'autre des deux cellules élémentaires

3. Système (1) réversible selon la revendication 1 ou 2, chaque anode de la pile étant constituée d'un cermet de nickel-zircone stabilisée à l'oxyde d'yttrium (Ni-YSZ).

4. Système (1) réversible selon l'une des revendications précédentes, le réacteur de méthanation comprenant un catalyseur solide de méthanation étant à base de nickel (Ni) supporté par un oxyde de zirconium (ZrO2), ou à base de nickel (Ni) supporté par un oxyde d'aluminium (Al₂O₃), ou bimétallique à base de nickel (Ni) et de fer (Fe) supporté par un oxyde d'aluminium (Al₂O₃), de préférence Ni-Fe/y- Al₂O₃, ou à base de nickel (Ni) supporté par des oxydes mixtes de Cérium (Ce) et de zirconium, de préférence Ce_{0.72}Zr_{0.28}O₂.

5. Système (1) réversible selon l'une des revendications précédentes, le réservoir d'hydrogène (5) étant un réservoir de stockage sous forme solide, contenant préférentiellement des hydrures métalliques, de préférence des hydrures de magnésium (MgH₂), la pression du réservoir étant alors comprise entre 2 et 15 bars, de préférence entre 8 et 12 bars dans le cas des hydrures de magnésium, ou un réservoir de stockage sous forme d'hydrogène gazeux, de préférence comprimé entre 200 et 700 bars, de préférence encore entre 350 et 700 bars.

6. Système (1) réversible selon l'une des revendications précédentes, comprenant au moins un premier échangeur de chaleur (6), adapté pour préchauffer en entrée de pile à combustible les gaz provenant du réacteur de méthanation à partir de la chaleur dégagée par les gaz en sortie de la pile à combustible.

7. Système (1) réversible selon la revendication 6, comprenant au moins un deuxième échangeur de chaleur (7), adapté pour préchauffer en entrée de réacteur de méthanation les gaz provenant du réservoir d'hydrogène et/ou séparateur de phase gaz-liquide, à partir de la chaleur dégagée par les gaz en sortie de la pile après le premier échangeur (6).

8. Procédé de fonctionnement en continu du système réversible selon l'une des revendications précédentes, comprenant les étapes simultanées suivantes:
- désorption de l'hydrogène du réservoir (5) pour alimenter l'entrée du réacteur de méthanation ;
- fonctionnement du réacteur de méthanation (4);
- fonctionnement de la pile à combustible (2) dans une gamme de température en entrée comprise entre 700°C et 800°C ;
- fonctionnement du séparateur gaz-liquide (3) de sorte à séparer l'eau du mélange de gaz comprenant principalement de l'hydrogène (H2), du monoxyde de carbone (CO) et du dioxyde de carbone (CO2), à la sortie de la pile à combustible,
procédé dans lequel le débit molaire de l'hydrogène en sortie du réservoir qui alimente l'entrée du réacteur de méthanation est sensiblement égal à celui oxydé en eau dans la pile à combustible et condensé dans le séparateur.

9. Procédé de fonctionnement selon la revendication 8, selon lequel on mélange l'hydrogène (1) issu du réservoir avec le mélange de gaz constitué par de l'hydrogène (2) (H₂), du monoxyde de carbone (CO) et du dioxyde de carbone (CO₂), issu de la pile à combustible, avant leur injection dans le réacteur de méthanation.

10. Procédé de fonctionnement selon la revendication 8 ou 9, selon lequel on ajuste le débit de méthane (CH4) en sortie du réacteur de méthanation et on choisit le point de fonctionnement nominal courant-tension (I, U) de la pile à combustible (SOFC) de sorte à obtenir un régime de fonctionnement autotherme de la pile à combustible (SOFC).

11. Procédé de fonctionnement selon l'une des revendications 8 à 10, selon lequel on récupère au moins une partie de la chaleur dégagée par le réacteur de méthanation et on la fournit au réservoir d'hydrogène afin de désorber l'hydrogène.

12. Utilisation d'une partie du système réversible selon l'une des revendications 1 à 7 pour produire et stocker de l'hydrogène à haute température, dans laquelle :
- la(les) cellule(s) est (sont) mises en œuvre en tant que cellule(s) d'électrolyse en constituant un électrolyseur à haute température (EHT) ;
- la sortie de l'électrolyseur EHT est reliée au réservoir de stockage d'hydrogène.

13. Utilisation selon la revendication 12 en combinaison avec la revendication 7 de système, le deuxième échangeur de chaleur étant adapté pour préchauffer en entrée d'électrolyseur EHT la vapeur d'eau à partir de la chaleur dégagée par l'hydrogène et/ou la vapeur d'eau en sortie d'électrolyseur EHT.

## Patentansprüche

1. Reversibles System (1) zur Stromerzeugung mittels Festoxid-Brennstoffzelle (SOFC), umfassend:
- eine Brennstoffzelle (SOFC) (2), umfassend mindestens eine elektrochemische Festoxid-Elementarzelle, die jeweils von einer Kathode, einer Anode und einem zwischen die Kathode und die Anode eingebrachten Elektrolyten gebildet wird;
- einen Gas-Flüssigkeits-Phasenseparator (3), der mit dem Auslass der Brennstoffzelle verbunden ist;
- einen Methanisierungsreaktor (4), der dafür ausgelegt ist, eine Methanisierungsreaktion durchzuführen, dessen Einlass mit dem Auslass des Phasenseparators verbunden ist und dessen Auslass mit dem Einlass der Brennstoffzelle verbunden ist, so dass das aus dem Methanisierungsreaktor kommende Gemisch in die Brennstoffzelle eingebracht wird;
- einen Tank zur reversiblen Speicherung von Wasserstoff (5), der dafür ausgelegt ist, Wasserstoff zu speichern und dessen Auslass mit dem Einlass des Methanisierungsreaktors verbunden ist;
wobei das System so konfiguriert ist, dass man in dem System die umgewandelten kohlenstoffhaltigen Spezies gleichzeitig in der Brennstoffzelle und in dem Methanisierungsreaktor in einem geschlossenen Regelkreis zirkulieren lässt.

2. Reversibles System (1) nach Anspruch 1, wobei es sich bei der Batterie um einen Stapelreaktor aus elektrochemischen Elementarzellen des SOFC-Typs, die jeweils von einer Kathode, einer Anode und einem zwischen die Kathode und die Anode eingebrachten Elektrolyten gebildet werden, und eine Mehrzahl elektrischer und fluidischer Zwischenverbinder handelt, die jeweils zwischen zwei benachbarten Elementarzellen mit einer ihrer Seiten in elektrischem Kontakt mit der Kathode einer der beiden Elementarzellen und der anderen ihrer Seiten in elektrischem Kontakt mit der Anode der anderen der beiden Elementarzellen angeordnet sind.

3. Reversibles System (1) nach Anspruch 1 oder 2, wobei jede Anode der Batterie aus einem Cermet aus Nickel-Yttriumoxid-stabilisiertem Zirkoniumoxid (Ni-YSZ) besteht.

4. Reversibles System (1) nach einem der vorhergehenden Ansprüche, wobei der Methanisierungsreaktor einen festen Methanisierungskatalysator umfasst, der auf Nickel (Ni) auf einem Träger aus einem Zirkoniumoxid (ZrO2) oder auf Nickel (Ni) auf einem Träger aus einem Aluminiumoxid (Al₂O₃) basiert oder bimetallisch ist und auf Nickel (Ni) und Eisen (Fe) auf einem Träger aus einem Aluminiumoxid (Al₂O₃) basiert, vorzugsweise Ni-Fe/γ-Al₂O₃, oder auf Nickel (Ni) auf einem Träger aus gemischten Oxiden von Cer (Ce) und Zirkonium, vorzugsweise Ce_{0,72}Zr_{0,28}O₂, basiert.

5. Reversibles System (1) nach einem der vorhergehenden Ansprüche, wobei es sich bei dem Wasserstofftank (5) um einen Tank zur Speicherung in fester Form, der vorzugsweise Metallhydride, vorzugsweise Magnesiumhydride (MgH₂), umfasst, wobei der Druck des Tanks dann zwischen 2 und 15 bar, vorzugsweise zwischen 8 und 12 bar im Fall von Magnesiumhydriden, liegt, oder um einen Tank zur Speicherung in Form von vorzugsweise zwischen 200 und 700 bar, ebenfalls bevorzugt zwischen 350 und 700 bar, komprimiertem gasförmigem Wasserstoff handelt.

6. Reversibles System (1) nach einem der vorhergehenden Ansprüche, das mindestens einen ersten Wärmeaustauscher (6) umfasst, der dafür ausgelegt ist, am Einlass der Brennstoffzelle die aus dem Methanisierungsreaktor kommenden Gase durch von den Gasen am Auslass der Brennstoffzelle abgegebene Wärme vorzuerhitzen.

7. Reversibles System (1) nach Anspruch 6, das mindestens einen zweiten Wärmeaustauscher (7) umfasst, der dafür ausgelegt ist, am Einlass des Methanisierungsreaktors die aus dem Wasserstofftank und/oder dem Gas-Flüssigkeits-Phasenseparator kommenden Gase durch von den Gasen am Auslass der Batterie nach dem ersten Austauscher (6) abgegebene Wärme vorzuerhitzen.

8. Verfahren zum kontinuierlichen Betrieb des reversiblen Systems nach einem der vorhergehenden Ansprüche, umfassend die folgenden gleichzeitigen Schritte:
- Desorption des Wasserstoffs aus dem Tank (5) zum Beschicken des Einlasses des Methanisierungsreaktors;
- Betreiben des Methanisierungsreaktors (4);
- Betreiben der Brennstoffzelle (2) in einem Temperaturbereich am Einlass zwischen 700 °C und 800 °C;
- Betreiben des Gas-Flüssigkeits-Separators zum Abtrennen des Wassers von dem hauptsächlich Wasserstoff (H2), Kohlenmonoxid (CO) und Kohlendioxid (CO2) umfassenden Gasgemisch am Auslass der Brennstoffzelle,
wobei bei dem Verfahren der molare Durchsatz von Wasserstoff am Auslass des Tanks, der den Einlass des Methanisierungsreaktors beschickt, im Wesentlichen gleich demjenigen ist, der in der Brennstoffzelle zu Wasser oxidiert und im Separator kondensiert wird.

9. Betriebsverfahren nach Anspruch 8, bei dem man den Wasserstoff (1) aus dem Tank mit dem aus Wasserstoff (2) (H₂), Kohlenmonoxid (CO) und Kohlendioxid (CO₂) bestehenden Gasgemisch aus der Brennstoffzelle vor ihrer Einspritzung in den Methanisierungsreaktor mischt.

10. Betriebsverfahren nach Anspruch 8 oder 9, bei dem man den Durchsatz von Methan (CH4) am Auslass des Methanisierungsreaktors einstellt und den nominalen Strom-Spannungs-(I, U)-Arbeitspunkt der Brennstoffzelle (SOFC) so wählt, dass man eine autotherme Arbeitsweise der Brennstoffzelle (SOFC) erhält.

11. Betriebsverfahren nach einem der Ansprüche 8 bis 10, bei dem man mindestens einen Teil der vom Methanisierungsreaktor abgegebenen Wärme zurückgewinnt und dem Wasserstofftank zuführt, um den Wasserstoff zu desorbieren.

12. Verwendung eines Teils des reversiblen Systems nach einem der Ansprüche 1 bis 7 zur Herstellung und Speicherung von Wasserstoff bei hoher Temperatur, wobei:
- die Zelle(n) als Elektrolysezelle(n) unter Bildung eines Hochtemperaturelektrolysators (HTE) verwendet wird bzw. werden;
- der Auslass des HTE-Elektrolysators mit dem Wasserstoffspeichertank verbunden wird.

13. Verwendung nach Anspruch 12 in Kombination mit dem Systemanspruch 7, wobei der zweite Wärmeaustauscher dafür ausgelegt ist, am Einlass des HTE-Elektrolysators den Wasserdampf durch vom Wasserstoff und/oder vom Wasserdampf am Auslass des HTE-Elektrolyseurs abgegebene Wärme vorzuerhitzen.

## Claims

1. A reversible system (1) for generating electricity with a solid oxide fuel cell (SOFC) comprising:
- a fuel cell (SOFC) (2) comprising at least one solid oxide individual electrochemical cell each formed of a cathode, an anode and an electrolyte inserted between the cathode and the anode;
- a gas-liquid phase separator (3), connected to the outlet of the fuel cell;
- a methanation reactor (4), suitable for carrying out a methanation reaction, the inlet of which is connected to the outlet of the phase separator and the outlet of which is connected to the inlet of the fuel cell so that the mixture resulting from the methanation reactor is introduced into the fuel cell;
- a tank (5) for reversible storage of hydrogen, suitable for storing hydrogen, the outlet of which is connected to the inlet of the methanation reactor,
the system being configured such that to make circulate the carbon-based species transformed both in the fuel cell and in the methanation reactor, in a closed loop.

2. The reversible system (1) as claimed in claim 1, the fuel cell being a reactor with a stack of individual electrochemical cells of SOFC type each formed of a cathode, an anode and an electrolyte inserted between the cathode and the anode, and a plurality of electrical and fluidic interconnectors each of which is arranged between two adjacent individual cells with one of its faces in electrical contact with the cathode of one of the two individual cells and the other of its faces in electrical contact with the anode of the other of the two individual cells.

3. The reversible system (1) as claimed in claim 1 or 2, each anode of the fuel cell being formed of a nickel-yttria-stabilized zirconia (Ni-YSZ) cermet.

4. The reversible system (1) as claimed in one of the preceding claims, the methanation reactor comprising a solid methanation catalyst that is based on nickel (Ni) supported by a zirconium oxide (ZrO₂), or based on nickel (Ni) supported by an aluminum oxide (Al₂O₃), or that is bimetallic based on nickel (Ni) and iron (Fe) supported by an aluminum oxide (Al₂O₃), preferably Ni-Fe/γ-Al₂O₃, or based on nickel (Ni) supported by mixed oxides of cerium (Ce) and of zirconium, preferably Ce_{0.72}Zr_{0.28}O₂.

5. The reversible system (1) as claimed in one of the preceding claims, the hydrogen tank (5) being a tank for storing hydrogen in solid form, preferentially containing metal hydrides, preferably magnesium hydrides (MgH₂), the pressure of the tank then being between 2 and 15 bar, preferably between 8 and 12 bar in the case of magnesium hydrides, or a tank for storing hydrogen in the form of gaseous hydrogen, preferably compressed between 200 and 700 bar, more preferably between 350 and 700 bar.

6. The reversible system (1) as claimed in one of the preceding claims, comprising at least a first heat exchanger (6), suitable for preheating, at the inlet of the fuel cell, the gases originating from the methanation reactor using the heat emitted by the gases at the outlet of the fuel cell.

7. The reversible system (1) as claimed in claim 6, comprising at least a second heat exchanger (7), suitable for preheating, at the inlet of the methanation reactor, the gases originating from the hydrogen tank and/or gas-liquid phase separator, using the heat emitted by the gases at the outlet of the fuel cell after the first exchanger (6).

8. A process for the continuous operation of the reversible system as claimed in one of the preceding claims, comprising the following simultaneous steps:
- desorption of the hydrogen from the tank (5) in order to supply the inlet of the methanation reactor;
- operation of the methanation reactor (4);
- operation of the fuel cell (2) in an inlet temperature range between 700°C and 800°C;
- operation of the gas-liquid separator (3) so as to separate the water from the gas mixture mainly comprising hydrogen (H₂), carbon monoxide (CO) and carbon dioxide (CO₂), at the outlet of the fuel cell,
in which process the molar flow rate of hydrogen leaving the tank that supplies the inlet of the methanation reactor is substantially equal to the flow rate oxidized to water in the fuel cell and condensed in the separator.

9. The operating process as claimed in claim 8, wherein the hydrogen (1) from the tank is mixed with the gas mixture formed by hydrogen (2) (H₂), carbon monoxide (CO) and carbon dioxide (CO₂) from the fuel cell, before the injection thereof into the methanation reactor.

10. The operating process as claimed in claim 8 or 9, wherein the flow rate of methane (CH₄) leaving the methanation reactor is adjusted and the nominal current-voltage (I, U) operating point of the fuel cell (SOFC) is chosen so as to obtain an autothermal operating regime of the fuel cell (SOFC).

11. The operating process as claimed in one of claims 8 to 10, wherein at least a portion of the heat emitted by the methanation reactor is recovered and is supplied to the hydrogen tank in order to desorb the hydrogen.

12. The use of part of the reversible system as claimed in one of claims 1 to 7 for producing and storing hydrogen at high temperature, wherein:
- the cell(s) is (are) used as electrolysis cell(s) by forming a high-temperature electrolyzer (HTE);
- the outlet of the HTE electrolyzer is connected to the hydrogen storage tank.

13. The use as claimed in claim 12, in combination with system claim 7, the second heat exchanger being suitable for preheating, at the inlet of the HTE electrolyzer, the steam using the heat emitted by the hydrogen and/or the steam at the outlet of the HTE electrolyzer.
